# EUROPEAN PATENT APPLICATION

(11) **EP 1 408 691 A2**
(43) Date of publication of application: **14.04.2004**
(21) Application number: 03020361.6
(22) Date of filing: 09.09.2003
(51) Int. Cl.: H04N 7/173

(54) **Receiving apparatus, receiving method, and method of predicting audience rating**

(30) Priority: 10.09.2002 JP 2002264064
(71) Applicant: CANON KABUSHIKI KAISHA, Ohta-ku, Tokyo (JP)
(72) Inventor: Mori, Shigeki, Ohta-ku, Tokyo (JP); Shibamiya, Yoshikazu, Ohta-ku, Tokyo (JP); Matsumoto, Yuichi, Ohta-ku, Tokyo (JP); Kutsuna, Masaki, Ohta-ku, Tokyo (JP); Fukuda, Tetsu, Ohta-ku, Tokyo (JP)
(74) Representative: Leson, Thomas Johannes Alois, Dipl.-Ing.

(57) **Abstract**

In order to allow various services utilizing expected audience ratings and viewer groups to be provided before or during broadcasting a program, the broadcast receiving apparatus for receiving a television broadcast is provided, which includes a setting unit for setting a timer reservation of recording or audio-visual enjoying a program, a transmitting unit for transmitting reservation information on the timer reservation set by the setting unit, and a receiving unit for receiving information on a reservation status of the program generated on the basis of the reservation information of a plurality of broadcast receiving apparatuses including the reservation information.

## Description

### BACKGROUND OF THE INVENTION

### Field of the Invention

The present invention generally relates to a digital television device, and more particularly to a receiving apparatus and method capable of making and confirming audio-visual enjoying and recording reservations for a program via a network or the like.

### Related Background Art

Up to now, digital television (DTV) devices have been progressively adapted to multichannel broadcasting including digital broadcasting via a broadcast satellite (BS) or a communication satellite (CS), wired digital broadcasting, and terrestrial digital broadcasting, and network broadcasting via Internet, as well as traditional analog broadcasting. It is becoming difficult for users to find programs which meet their audio-visual enjoying purpose or preference and to select one which they wish to watch, only by means of an electronic program guide (hereinafter abbreviated as EPG) including program service information sent with broadcasts. With this in mind, for the purpose of extending an audio-visual enjoying support function and a manipulation support function in a DTV device, some of the recent DTV devices are equipped with an agent function for helping manipulation by users, thereby providing a mechanism, for example, for recommending programs which may meet their purpose or preference based on their individual taste and favorites. Further, the agent function provided in the DTV device main body has a limitation on its available resources, and on its ability itself, due to a matter of product cost and performance. There is thus another EPG service which has a greater amount of information and a higher search ability and utilizes a more accurate agent function, by connecting via a network external to the DTV device with a host having a higher ability and storing an abundance of program-related additional information.

These DTV devices adapted to a network and providers offering an EPG service support not only the network communication between the DTV device and the service provider, but also a network communication between a mobile terminal or mobile telephone and the service provider. This enables a user being out of the house to set up audio-visual enjoying and recording reservations even for the DTV device in his/her house via the network by browsing the EPG and making the audio-visual enjoying and recording reservations for a desired program.

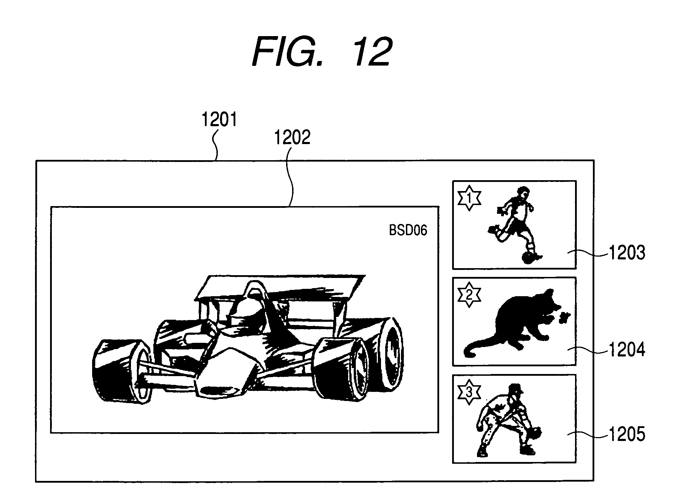

Moreover, there is a system which retrieves audience ratings and other information on a real-time basis from a research company of broadcast program audience ratings via a network connected to the DTV device and provides users of the DTV device with information on programs which currently have higher audience ratings as recommended programs. There is another system, as shown in reference numerals 1203 to 1205 of FIG. 12, which notifies users of highlyrated programs by displaying them in child panels. Furthermore, Japanese Patent Application Laid-Open No. 2001-8119 (US 2003/093795 AA) discloses a display control apparatus for receiving and displaying audience rating information.

In such arrangements as described above, however, no matter what an excellent host device may be used to provide an EPG service, the program service information being referred to is centered on information provided by the broadcaster which. provides the program contents. Basically, therefore, it always tends to be information which interests users and inspires them to view its programs. Actually, even if it accurately reflects personal profile information held by the agent function including information on the users' taste and favorites, the programs may not be really enjoyable for them.

Further, information including audience ratings which evidences that many viewers are watching a program, when the result arrives from the above research company, is likely to lag behind the feature which raised the audience rating. Even if users start to watch the program afterward on the basis of the high rating information, it is not necessarily likely to be a program which they wish to watch.

In addition, also for broadcasters, while audience ratings of individual programs can be predicted in advance, the actual ratings may lead to unexpected consequences because various factors are involved such as influence of the programs of the other broadcasters, and the weather and the situation on the day of interest. In some cases, the effect of a commercial counting on audience ratings assumed in advance and its explanation to the sponsor, as well as various effects associated with the program, have been greatly different from the estimation, thereby causing some damage. A burden of broadcaster's server is changed by number of viewers (audience).

### SUMMARY OF THE INVENTION

The present invention therefore has an object to provide a receiving apparatus, a receiving method, and a method of predicting an audience rating, which allow various services utilizing expected audience ratings and viewer groups to be provided before or during broadcasting a program.

According to one aspect of the invention, a receiving apparatus for receiving a program includes:
setting means for setting at least one of a reservation for recording the program and a reservation for audio-visual enjoying the program;
transmitting means for transmitting reservation information on the reservation set by the setting means; and
receiving means for receiving information on a reservation status of the program generated based on the reservation information and reservation information of a plurality of other receiving apparatuses.

In another aspect of the receiving apparatus, the receiving means receives the information on the reservation status before a finish time of broadcasting of the program.

In further another aspect of the receiving apparatus, the information on the reservation status is an audience rating predicted based on the reservation information.

In further another aspect of the receiving apparatus, the audience rating is predicted by individually weighting recording reservation information and audio-visual enjoying reservation information in the reservation information.

In further another aspect of the receiving apparatus, based on collected information on at least one of the audio-visual enjoying reservation and the recording reservation, advance notice of execution of reservation is given to a mobile terminal associated with the receiving apparatus to which the reservation has been made, before an operation due to the reservation is executed in the receiving apparatus.

According to another aspect of the invention, a receiving method includes:
setting at least one of a reservation for recording a program to be broadcast and a reservation for audio-visual enjoying the program;
transmitting reservation information on the set reservation; and
receiving information on a reservation status of the program generated based on the reservation information and reservation information of a plurality of other broadcast receiving apparatuses.

In another aspect of the receiving method, the reservation is set from a network-connected mobile terminal to a receiving apparatus network-connected via a host computer providing an EPG service.

According to another aspect of the invention, a method of transmitting a reservation status includes:
receiving reservation information on at least one of an audio-visual enjoying reservation and a recording reservation which are timer-reserved in each of a plurality of receiving apparatuses;
generating information on a reservation status of a program based on the received reservation information; and
transmitting the generated information on the reservation status to at least one of the plurality of receiving apparatuses.

According to another aspect of the invention, a method of predicting an audience rating includes:
collecting information on at least one of an audio-visual enjoying reservation and a recording reservation in a plurality of receiving apparatuses; and
predicting an audience rating in a program to be broadcast based on the information collected and time information up to a start time of broadcasting.

In another aspect of the method of predicting an audience rating, the information on the audio-visual enjoying reservation and the recording reservation is separately summed up, each weighted by a ratio, and then added up to form a combined point, which is used in conjunction with the time information up to the start time of broadcasting to predict the audience rating in the program.

In further another aspect of the method of predicting an audience rating, displacement at a plurality of specific points of time for a summed result of the audio-visual enjoying reservation and the recording reservation of the program is used to predict a reservation status of the audio-visual enjoying reservation and the recording reservation immediately before broadcasting of the program, and the audience rating in the program is predicted based on the reservation status expected.

In further another aspect of the method of predicting an audience rating, information on a user's profile is collected, and the audience rating in the program is predicted for each audio-visual enjoying user group identifiable in the user's profile.

In further another aspect of the method of predicting an audience rating, regarding a commercial advertisement spot to be inserted in a program for which the audience rating is predicted, a plurality of mutually different types of commercial advertisements are prepared, and a commercial advertisement to be used at a time of broadcasting the program is selected based on constituent contents of a user's profile contained in reservation rating data used for predicting the audience rating.

In further another aspect of the method of predicting an audience rating, a program advertisement to be broadcast in a spot for program advertisement prepared in advance is selected based on the predicted audience rating of the program.

In further another aspect of the method of predicting an audience rating:
regarding the program for which the audience rating is predicted, a plurality of types of commercial advertisements which can be inserted are prepared;
among the information used for the prediction, constituent ratios of the audio-visual reservation and the recording reservation are calculated;
it is determined whether or not the constituent ratio of the recording reservation which is calculated is greater than a certain predetermined value; and
if it is determined that the constituent ratio of the recording reservation is greater, a specific commercial advertisement of the plurality of types of commercial advertisements is selected for inserting into the program.

In one embodiment of the present invention, when an audio-visual enjoying and/or recording reservation for a program is made directly or via network means to each user's individual DTV device, the above various reservation information is collected via network means connected to the DTV device. This is analyzed to predict audience ratings for separate programs. On the basis of the predicted information, each user may be notified of program information, which may be provided as additional information to be used in the EPG and in the agent function. To the broadcasters, the predicted audience ratings and specific information on the viewers may be provided.

Another embodiment of the present invention is a broadcast receiving apparatus for receiving a television broadcast, which includes: setting means for setting a timer reservation of recording or audio-visual enjoying a program; transmitting means for transmitting reservation information on the timer reservation set by the setting means; and receiving means for receiving information on a reservation status of the program generated on the basis of the reservation information of a plurality of broadcast receiving apparatuses including the reservation information.

### BRIEF DESCRIPTION OF THE DRAWINGS

FIG. 1 shows a DTV device and a peripheral system according to a first embodiment of the present invention;
FIG. 2 shows an external view of a remote control device according to the first embodiment of the present invention;
FIG. 3 shows a functional block diagram illustrating the first embodiment of the present invention;
FIG. 4 shows a diagram illustrating the first embodiment of the present invention;
FIG. 5 shows a diagram illustrating the first embodiment of the present invention;
FIG. 6 shows a flow chart illustrating an operation of the first embodiment of the present invention;
FIG. 7 shows a diagram illustrating the first embodiment of the present invention;
FIG. 8 shows a diagram illustrating the first embodiment of the present invention;
FIG. 9 shows a diagram illustrating the first embodiment of the present invention;
FIG. 10 shows a diagram illustrating an operation of a second embodiment of the present invention;
FIG. 11 shows a flow chart illustrating the second embodiment of the present invention; and
FIG. 12 shows a diagram illustrating a conventional art.

### DESCRIPTION OF THE PREFERRED EMBODIMENTS

### First Embodiment

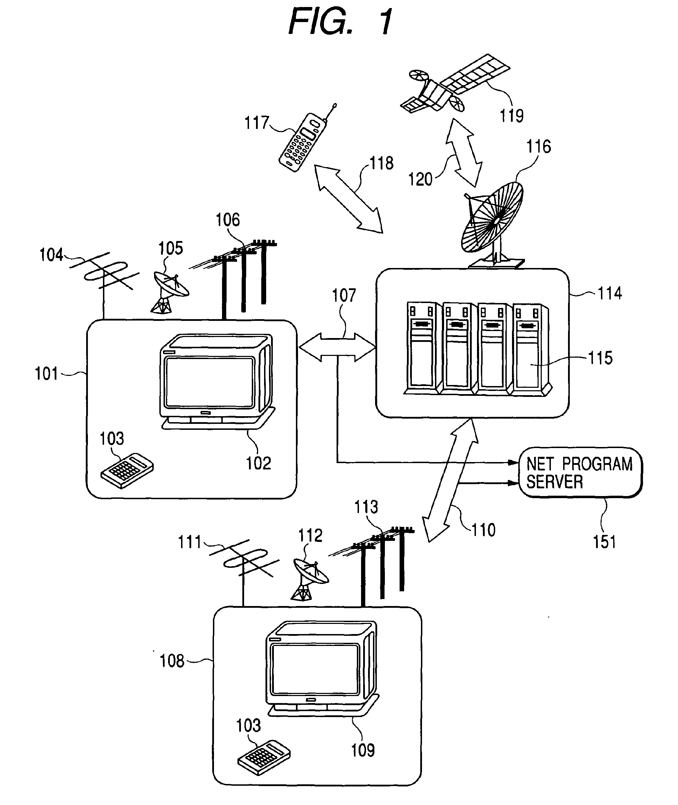

FIG. 1 is a figure which best represents characteristics of a DTV device as a receiving apparatus according to the present invention. Here, reference numerals 101 and 108 denote individual houses where DTV devices are installed. Inside them, reference numerals 102 and 109 denote DTV devices; 103, remote control devices; 104 and 111, antenna devices for receiving terrestrial broadcasting; 105 and 112, antenna devices for receiving satellite broadcasting; and 106 and 113, cable devices for receiving wired broadcasting. Further, reference numeral 114 denotes an EPG service provider which provides a sophisticated EPG service to subscribers, and is connected with individual houses by network means 107 and 110. Here, reference numeral 115 denotes a host computer which stores information and processes operations for providing service, and provides an EPG application service, and 116 an antenna device for receiving various information. Furthermore, a mobile terminal device 117 is capable of receiving the service of the EPG service provider 114 outdoors, and coupled by various radio communication means 118. In addition, reference numeral 119 denotes a satellite for transmitting broadcasts and performing various communications, which are received and communicated by the antenna devices 105, 112, and 116. A net program server 151 for casting program is optionally connected with Internet via network means 107 and 110, home 108 and provider 114, so that any information is obtained.

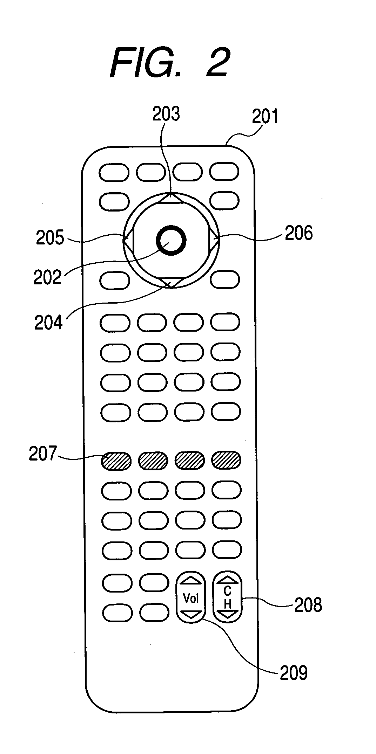

FIG. 2 shows a remote control device for manipulating a DTV device according to the present invention. Reference numeral 201 denotes a remote control device main body; 202 to 206, a run button at the center and up/down/left/right move buttons for manipulating various setup menu panels on the DTV device, respectively; 207, a color button used for data broadcasts in digital broadcasting; 208, a channel up/down button for moving up/down the channels; and 209, an up/down button for controlling sound volume of the DTV device.

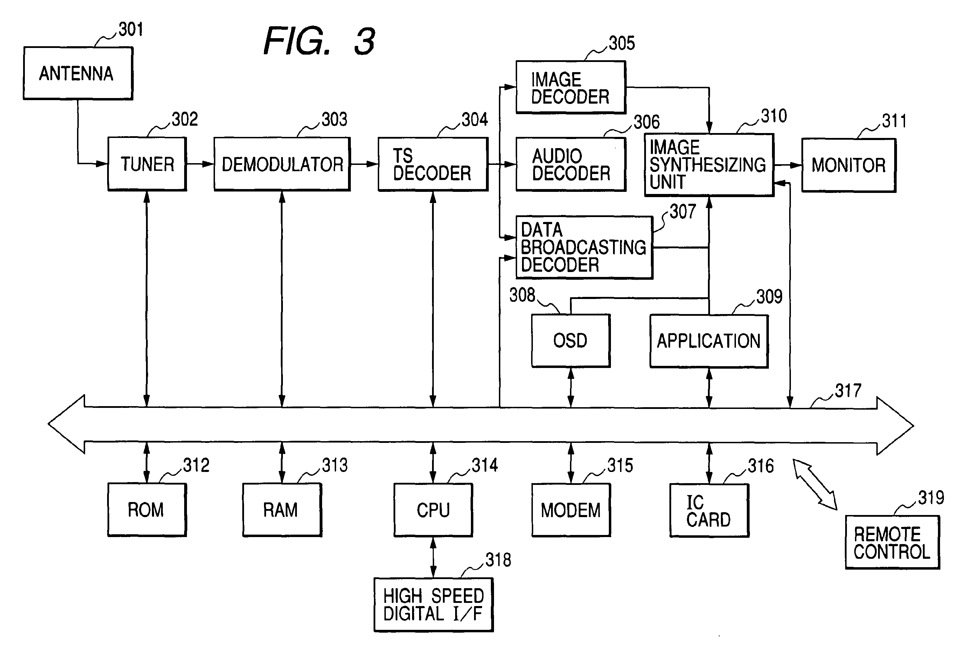

FIG. 3 is a block diagram showing an internal configuration of a DTV device according to the present invention. Here, reference numeral 301 denotes an antenna device for receiving digital broadcasting radio waves; 302, a tuner device for channel selecting and tuning a radio wave received from the antenna; 303, a demodulator circuit device for demodulating the channel selected radio wave and converting it into a signal; 304, a TS decoder circuit for separating a TS signal from the demodulated signal; 305, an image decoder circuit for image decoding from the separated TS signal; 306, an audio decoder circuit for audio decoding again from the TS signal; 307, a data broadcast decoder circuit for decoding a data broadcast again from the TS signal; 308, an OSD circuit for displaying information from various control devices in the remote control device main body; 309, various applications installed in the DTV device; 310, an image synthesizing unit for synthesizing and outputting various image information created inside the DTV device; 311, a monitor device representing a display screen of the DTV device; 312, a ROM device for storing programs for various controls on the DTV device and programs and various data for the installed applications; 313, a RAM device for storing programs for various controls on the DTV device and programs and various data for the installed applications, and further representing a workspace for operating the applications; 314, a CPU device for executing various controls and applications of the DTV device; 315, a modem device for communicating between the DTV device and external equipment (on server); 316, an IC card device for performing an authentication operation in a limited receiving operation of the DTV device, or exchanging various information with the external equipment; 317, a bus device for conveying information among respective circuit blocks in the DTV device; 318, an interface circuit for exchanging data containing image data at a high speed with the external equipment connected to the DTV device; and 319, a remote control device for conveying various commands to the DTV device.

Now, while describing actual manipulations on the DTV device, detailed description will be made of operations of the host computer on the provider side that offers information of an expected audience rating which is network-connected with the DTV device according to the present invention.

For the DTV device according to the present invention, it is assumed that a user provides the user's own profile information and program reservation information in advance, and subscribes to a provider for the purpose of receiving a service of providing information of an expected audience rating.

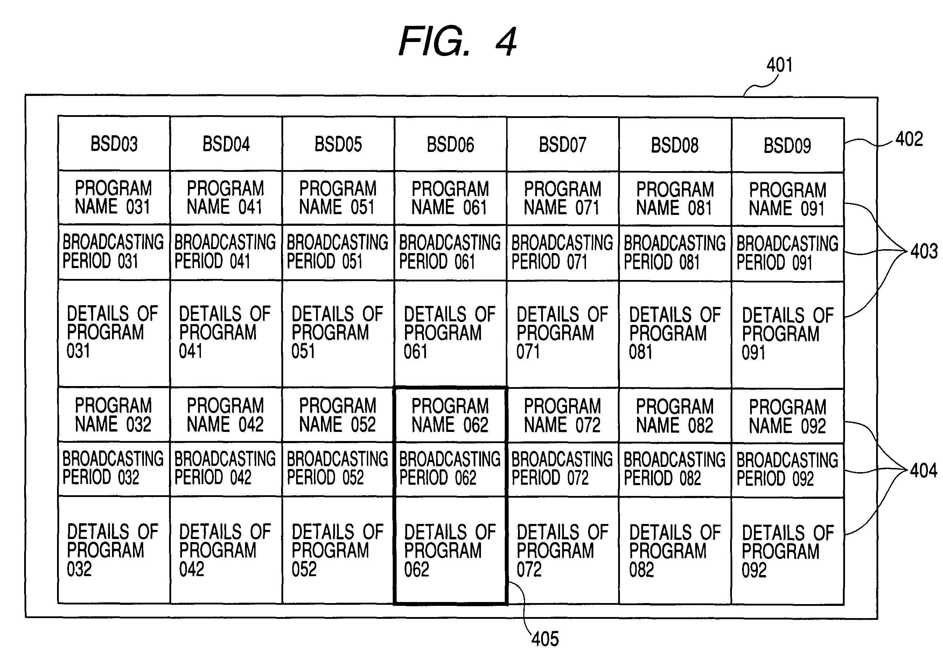

FIG. 4 illustrates an EPG application installed in the DTV device according to the present invention. Here, reference numeral 401 denotes a display screen of the DTV device; 402, a row indicating a broadcaster's channel ID; and 403 and 404, a program name, broadcasting period, and program information of a program scheduled to be broadcast on the channel indicated by each channel ID. Further, reference numeral 405 denotes a focus frame indicating a program currently selected by the user. It can be moved among programs using cursor move keys on the remote control device. Note that in this figure, for simplicity of illustration, all the programs are shown as if they were broadcast in the same time frame irrespective of the channels. But in reality, of course, it is not always the case.

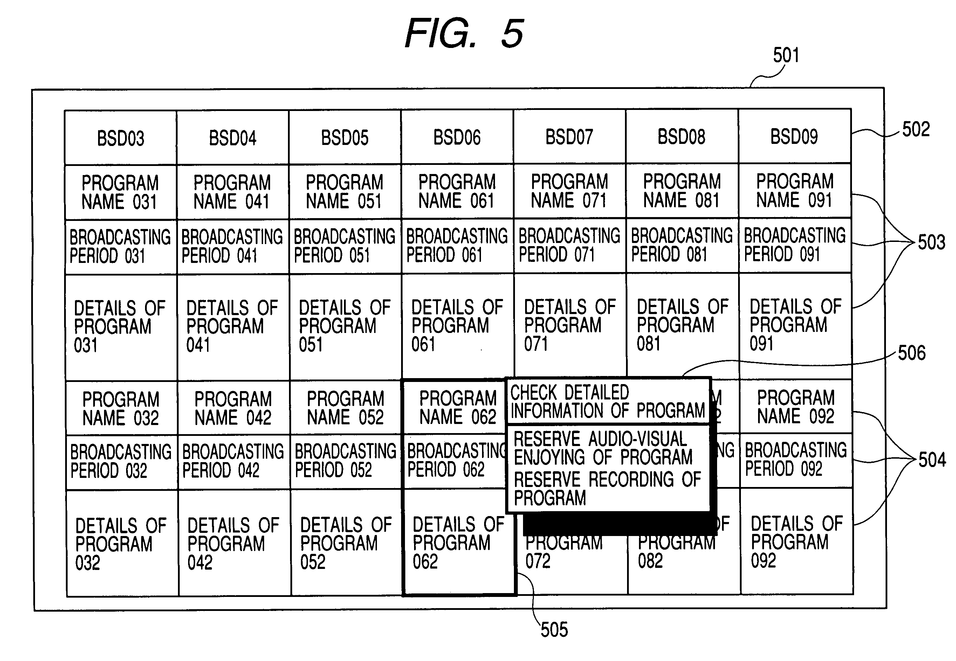

FIG. 5 illustrates an example where a context menu for manipulation on a selected location is opened in the program selecting state in FIG. 4. The context menu is displayed by means of a dialog box denoted by reference numeral 506. Now, in an EPG application according to this embodiment, after a program is selected, three possible manipulations as follows have become acceptable by opening the context menu: "Check detailed information of the program," "Reserve audio-visual enjoying of this program" and "Reserve recording of this program."

In the DTV device according to the present invention, it is assumed in this situation that either "Reserve audio-visual enjoying of this program" or "Reserve recording of this program" is selected. The DTV device then performs the selected reservation operation, as well as transmits information on a user's profile, the DTV device ID, and reservation information such as the channel ID and the event ID, which are stored in the DTV device, to the subscribed service provider. Thus, the service provider is provided with a great amount of program reservation information from subscribing users.

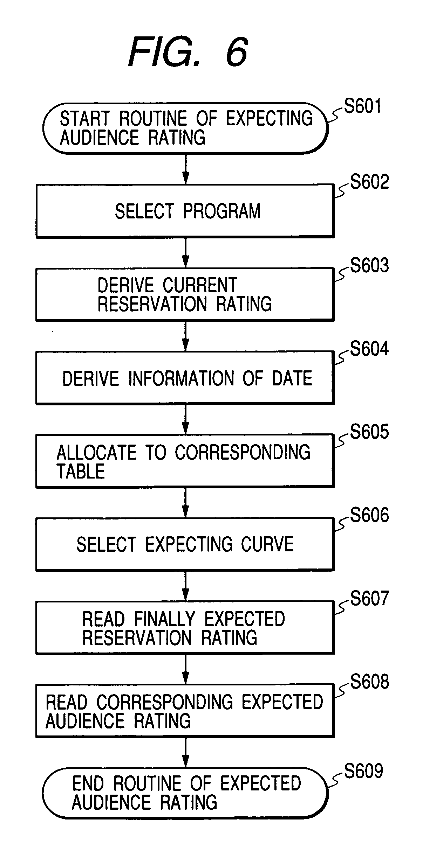

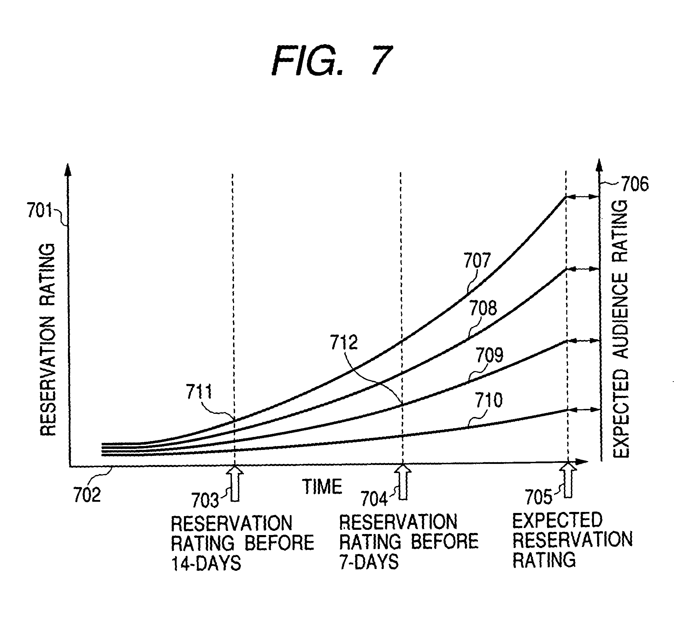

FIG. 6 is a flow chart illustrating a procedure in the host computer of the service provider in which audience ratings are predicted from the program reservation information sent from the subscribing users. Now the above host computer is instructed to calculate an expected audience rating for a specific program on the basis of the collected program reservation information. Control is then passed to step S601 of FIG. 6 where a routine of expecting an audience rating is started. In step S602, information on the specified program is selected, and in step S603, data of an aggregate program reservation rating on the program of interest is derived. In step S604, broadcast date and time information for the specified program and current date and time information are derived, and in step S605, allocation to a corresponding table shown in FIG. 7 is performed. FIG. 7 shows the conversion table for calculating an expected reservation rating on the broadcast day from the program reservation rating summed up a certain days before the broadcast day, and then using the correspondence to this to derive the expected audience rating. In this embodiment, the table as shown in FIG. 7 is presented for illustration. But in reality, of course, it is typically derived by using a calculating equation, and the curves shown in the table have been statistically determined on the basis of the relation of actual audience ratings to actual program reservation information. Now in step S605, it is assumed that, for example, the reservation rating of the program indicated as 711 was summed up fourteen days before the actual broadcast day. Then in step S606, an expecting curve 707 shown in FIG. 7 is selected. In step S607, the intersection point of the expecting curve 707 and an expected reservation rating 705 on the broadcast day is determined. In step S608, a value of the expected audience rating corresponding to the intersection point is read. Finally, in step S609, the routine of expecting the audience rating is ended. In this routine, if data indicated as 712 which corresponds to seven days before the broadcast day is obtained, then in step S606, an expecting curve 709 is selected. As a result, a different expected audience rating will be calculated. In this way, calculation of expected audience ratings according to this algorithm makes it possible to obtain a more accurate expected audience rating as the broadcast day of the program draws nearer. Thus, expected audience ratings for all the programs scheduled to be broadcast are calculated as appropriate in the host computer of the service provider, and necessary information can be provided to subscribers at any time.

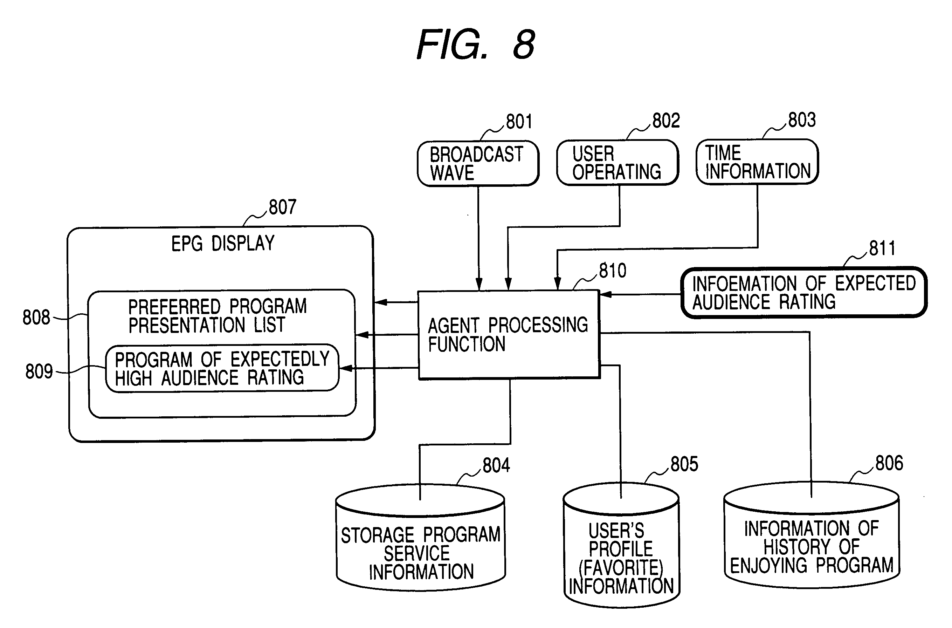

FIG. 8 shows functional blocks of the agent function installed on the DTV device according to the present invention. Here, reference numerals 801 to 803 denote a group of information which the agent processing function can usually obtain from outside. Reference numeral 801 denotes a broadcast wave containing program service information to be stored in a storage program service information 804, and 802 denotes information on manipulations exerted by a user on the DTV device. This is used in combination with various inputs of the user's favorites information stored in user's favorites information 805 and time information 803 to create information of the history of enjoying programs stored in information of a history of enjoying program 806, which reflects actual audio-visual enjoying derived from the user's manipulation sequence. Further, reference numeral 811 denotes information of an expected audience rating which is available by means of network means from the above service provider. Reference numeral 807 denotes EPG display information which an agent processing function 810 has retrieved and extracted on the basis of the stored group of information 804 to 806. In addition, reference numeral 808 denotes a preferred program presentation list which is in turn extracted from an EPG display 807 as a set of the user's preferred programs; and 809, a set of programs of expectedly high audience ratings selected on the basis of the information of an expected audience rating 811.

Here, the user appearing in the description of FIG. 8 may be different from the user who previously made program reservations, or the same user may be selecting other programs using the EPG.

As described above, the agent function usually presents preferred programs to the users on the basis of their favorites information, audio-visual enjoying history and manipulation history via the EPG. The DTV device according to the present invention, however, can also present programs of expectedly high audience ratings utilizing the information of expected audience ratings as needed.

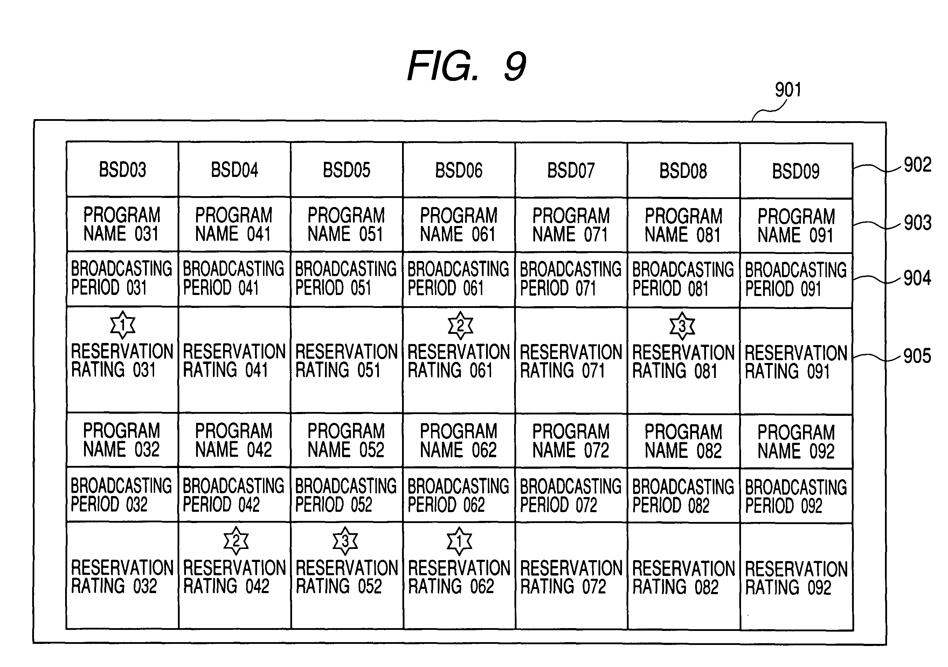

FIG. 9 shows a presentation in the DTV device of the present invention where programs ranking first to third in the same time frame are marked as the programs of expectedly high audience ratings noted above.

In this way, in the EPG display of the DTV device, the programs of expectedly high audience ratings are identified and announced. The user can thereby know popular programs which many other viewers may be scheduled to enjoy, as well as information of recommended programs selected by the agent function.

Further, when the agent function extracts recommended programs, the information of expected audience ratings may be taken into account. Thus, not only recommended programs on the basis of the user's favorites information and habitual audio-visual enjoying, but also recommended programs which take the trend of the world into account can be provided.

Furthermore, when the expected audience ratings are provided, information of popular programs can also be provided separately for each of the groups classified by sex, age, occupation and the like, if the summation method of the service provider allows the information to be classified on the basis of profile information of the subscribers who provide the reservation information.

Note that, in this embodiment, users make program reservations by utilizing the EPG function attached to the DTV device main body. However, a mobile terminal such as the mobile terminal device 117 shown in FIG. 1 may be used to access the EPG service provider 114 and to make program reservations to the EPG provided by the service provider when the user is out. In this case the service provider can make program reservations to the DTV devices in individual houses via network means. Of course, in this case, the DTV device remotely manipulated for program reservations does not need to transmit information on such program reservations to the service provider.

In addition, in this embodiment, the audience rating of each program is expected on the basis of program reservation information in a plurality of DTV devices. However, program reservation information in a plurality of DTV devices may be summed up to transmit reservation ratings indicating the reservation status of respective programs to each of the DTV devices.

As described above, according to the present invention, not only an EPG based on conventional program service information accompanying broadcast waves and on information from EPG operators may be browsed to reserve programs, but also information based on expected audience ratings which are in turn based on actual program reservation information of other users may be taken into account. Users can thereby extend the range of information within which they may select programs to enjoy. The information will be important when they select programs which they wish to watch among many channels.

### Second Embodiment

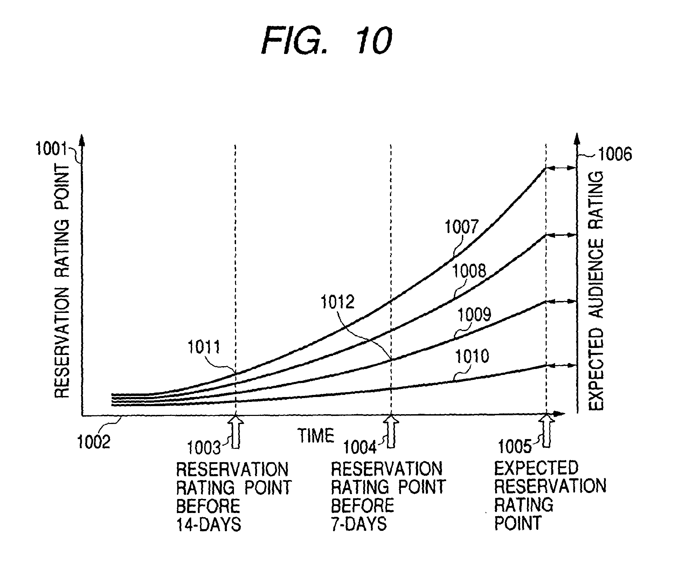

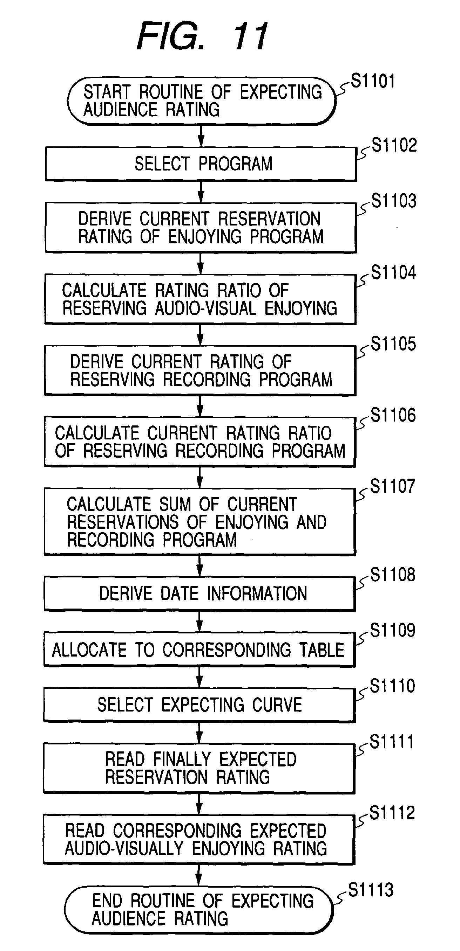

In the above embodiment, the audio-visual enjoying reservations for receiving some form of notice of the beginning of programs from the DTV device are summed up in the same condition to derive a reservation rating as the recording reservations of programs which the user would not miss at any price when the user is out during the broadcasting period of the program, or when any unexpected accident occurs even if the user is at home during the broadcasting period of the program. As shown in FIG. 11, however, the reservation rating of audio-visual enjoying programs and the reservation rating of recording programs may be independently summed up. Each of these numerical values is further multiplied by a specific ratio for weighting, and they are added up to obtain a reservation rating point. This reservation rating point is used to select an expecting curve as shown in FIG. 10, and then an expected audience rating is calculated. Thus, a more accurate expected audience rating can be calculated, taking into account the user's attitude toward the audio-visual enjoying and recording reservations.

### Third Embodiment

In any of the above embodiments, a curve is selected in the corresponding table on the basis of the reservation rating at a specific time before the broadcast day, and thereby an expected audience rating is uniquely calculated. In some cases, however, as the time of broadcasting draws near, selection of a curve based on the reservation rating at a specific time may not fit the current situation due to unexpected word-of-mouth propagation of information, a lively atmosphere caused by a program-related event being held, or the effect of intensive advertisement of the program.

In this embodiment, coefficients constituting the curve are successively modified on the basis of the rising rate of reservation ratings at two specific times such as fourteen days and seven days before the broadcast day. Thus, an approximate curve for deriving a value closer to the actual audience rating can be calculated in advance. Accordingly, expected audience ratings can be calculated more accurately.

### Fourth Embodiment

In any of the above embodiments, users may forget making audio-visual enjoying reservations even if they did. In some cases, even if they utilize a sophisticated EPG service, or even if they specially make the reservations using a mobile terminal when they are out, they may be displeased if they are not near the DTV device on the broadcast day.

In this embodiment, when the audio-visual enjoying reservation is made, the EPG service provider causes an advance alarm of audio-visual enjoying in the user's mobile terminal device connected via network means to be scheduled for the date and time set for the audio-visual enjoying reservation. This eliminates the risk that users may miss the program which they reserved for audio-visual enjoying.

### Fifth Embodiment

Any of the above embodiments has merits for users subscribing to the EPG service provider. However, the broadcaster can also utilize the expected audience ratings.

In this embodiment, personal profiles of the viewers collected by the EPG service provider are used to identify a user group of a high expected audience rating for a specific program. Depending on the identified result, at the time of broadcasting the program, commercial advertisements of sponsor companies predetermined can be replaced by commercial advertisements which are more suitable to the user group of a high expected audience rating, thereby achieving a greater effect of commercial advertisements.

Further, when there is any program with an especially low expected audience rating, a preview for this program can be effectively broadcast in advance to improve the actual audience rating of this program. Accordingly, the value of the commercial advertisement spot in this program can be maintained.

Moreover, program reservation information collected in advance can be used to presuppose the time when programs with a high ratio of recording reservations will be replayed and viewed in respective houses. Commercial advertisements suited for the presupposed time of being replayed and viewed may be inserted in advance, thereby achieving a greater effect of commercial advertisements at the time different from the time of broadcasting.

In addition, expected audience ratings can be obtained for all the programs in advance. Thus, audience ratings for respective actual programs can be controlled by effectively putting in previews. This enables systematic pricing and business activity of commercial advertisement spots toward sponsor companies. In case that broadcaster uses expected audience ratings, the broadcaster cooperates with provider who provides the expected audience ratings. For an area with expected higher audience ratings on a program, a program server of the provider has high-powered output capability or high-performance network communication capability. In this embodiment, setting of excessive number of servers is prevented. And poor reception of program based on overload of the program server is prevented.

As described above, the present invention enables more meaningful selection of programs for users when they select the programs at the DTV device by relying on the conventional EPG including only program-related information as well as on information of expected audience ratings of the programs based on reservation ratings by many identified user groups. In addition, broadcasters can operate commercial advertisements more effectively by obtaining expected audience ratings of the programs in advance.

In order to allow various services utilizing expected audience ratings and viewer groups to be provided before or during broadcasting a program, the broadcast receiving apparatus for receiving a television broadcast is provided, which includes a setting unit for setting a timer reservation of recording or audio-visual enjoying a program, a transmitting unit for transmitting reservation information on the timer reservation set by the setting unit, and a receiving unit for receiving information on a reservation status of the program generated on the basis of the reservation information of a plurality of broadcast receiving apparatuses including the reservation information.

## Claims

1. A receiving apparatus for receiving a program, comprising:
setting means for setting at least one of a reservation for recording the program and a reservation for audio-visual enjoying the program;
transmitting means for transmitting reservation information on the reservation set by the setting means; and
receiving means for receiving information on a reservation status of the program generated based on the reservation information and reservation information of a plurality of other receiving apparatuses.

2. A receiving apparatus according to claim 1, wherein the receiving means receives the information on the reservation status before a finish time of broadcasting of the program.

3. A receiving apparatus according to claim 1, wherein the information on the reservation status is an audience rating predicted based on the reservation information.

4. A receiving apparatus according to claim 3, wherein the audience rating is predicted by individually weighting recording reservation information and audio-visual enjoying reservation information in the reservation information.

5. A receiving method, comprising:
setting at least one of a reservation for recording a program to be broadcast and a reservation for audio-visual enjoying the program;
transmitting reservation information on the set reservation; and
receiving information on a reservation status of the program generated based on the reservation information and reservation information of a plurality of other broadcast receiving apparatuses.

6. A method of transmitting a reservation status, comprising:
receiving reservation information on at least one of an audio-visual enjoying reservation and a recording reservation which are timer-reserved in each of a plurality of receiving apparatuses;
generating information on a reservation status of a program based on the received reservation information; and
transmitting the generated information on the reservation status to at least one of the plurality of receiving apparatuses.

7. A method of predicting an audience rating, comprising:
collecting information on at least one of an audio-visual enjoying reservation and a recording reservation in a plurality of receiving apparatuses; and
predicting an audience rating in a program to be broadcast based on the information collected and time information up to a start time of broadcasting.

8. A method of predicting an audience rating according to claim 7, wherein the information on the audio-visual enjoying reservation and the recording reservation is separately summed up, each weighted by a ratio, and then added up to form a combined point, which is used in conjunction with the time information up to the start time of broadcasting to predict the audience rating in the program.

9. A method of predicting an audience rating according to claim 7, wherein displacement at a plurality of specific points of time for a summed result of the audio-visual enjoying reservation and the recording reservation of the program is used to predict a reservation status of the audio-visual enjoying reservation and the recording reservation immediately before broadcasting of the program, and the audience rating in the program is predicted based on the reservation status expected.

10. A method of predicting an audience rating according to claim 7, wherein information on a user's profile is collected, and the audience rating in the program is predicted for each audio-visual enjoying user group identifiable in the user's profile.

11. A receiving method according to claim 5, wherein the reservation is set from a network-connected mobile terminal to a receiving apparatus network-connected via a host computer providing an EPG service.

12. A receiving apparatus according to claim 1, wherein based on collected information on at least one of the audio-visual enjoying reservation and the recording reservation, advance notice of execution of reservation is given to a mobile terminal associated with the receiving apparatus to which the reservation has been made, before an operation due to the reservation is executed in the receiving apparatus.

13. A method of predicting an audience rating according to claim 7, wherein, regarding a commercial advertisement spot to be inserted in a program for which the audience rating is predicted, a plurality of mutually different types of commercial advertisements are prepared, and a commercial advertisement to be used at a time of broadcasting the program is selected based on constituent contents of a user's profile contained in reservation rating data used for predicting the audience rating.

14. A method of predicting an audience rating according to claim 7, wherein a program advertisement to be broadcast in a spot for program advertisement prepared in advance is selected based on the predicted audience rating of the program.

15. A method of predicting an audience rating according to claim 7, wherein:
regarding the program for which the audience rating is predicted, a plurality of types of commercial advertisements which can be inserted are prepared;
among the information used for the prediction, constituent ratios of the audio-visual reservation and the recording reservation are calculated;
it is determined whether or not the constituent ratio of the recording reservation which is calculated is greater than a certain predetermined value; and
if it is determined that the constituent ratio of the recording reservation is greater, a specific commercial advertisement of the plurality of types of commercial advertisements is selected for inserting into the program.
